Europäisches Patentamt

European Patent Office

Office européen des brevets

(11) Publication number: **0 047 637**
**B1**

## (12) EUROPEAN PATENT SPECIFICATION

(45) Date of publication of patent specification: **14.03.84**

(51) Int. Cl.³: **B 62 L 3/02**

(21) Application number: **81304036.7**

(22) Date of filing: **03.09.81**

(54) Cycle control device.

(30) Priority: **10.09.80 JP 129534/80**

(43) Date of publication of application:
**17.03.82 Bulletin 82/11**

(45) Publication of the grant of the patent:
**14.03.84 Bulletin 84/11**

(84) Designated Contracting States:
**CH DE FR GB LI NL**

(56) References cited:
**GB - A - 778 809**
**US - A - 3 752 005**
**US - A - 4 100 820**
**US - A - 4 222 285**

(73) Proprietor: SHIMANO INDUSTRIAL COMPANY LIMITED
77, 3-cho Oimatsu-cho Sakai-shi
Osaka (JP)

(72) Inventor: Shimano, Keizo
81, 3-cho, Midorigaoka-Minamimachi
Sakai-shi Osaka (JP)

(74) Representative: Szczuka, Jan Tymoteusz et al,
Cruikshank & Fairweather 19 Royal Exchange Square
Glasgow G1 3AE Scotland (GB)

Courier Press, Leamington Spa, England.

Cycle control device

This invention relates to a control device for a cycle having drop-type handlebars with straight and arcuate portions for mounting on a said arcuate handlebar portion, said device comprising: a bracket member having a front wall, a rear wall, and first and second side walls; a first control lever pivotally mounted in said bracket member so as to extend, in use, generally alongside said arcuate handlebar portion; a second control lever pivotally mounted at the outer surface of said first side wall of said bracket member, to extend generally alongside said straight handlebar portion, and having a drive transmission means for transmitting drive to said first control lever during movement of said second control lever; and a grip shaped cover covering said bracket member and the pivotal mountings of said first and second control levers on said bracket member.

Known kinds of brake control devices of this type generally comprise a bracket member mounted on the arcuate portion of the drop handlebar, a first brake control lever extending along the arcuate portion of the drop handlebar, and a second brake control lever extending along a straight portion and operable in association with the first lever, the first control lever being operable by a cyclist's hand when gripping the arcuate portion, the second control lever being operable by his hand when gripping the straight portion, so that the cyclist, while gripping the bracket member with his hand, can steer the cycle and simultaneously operate the first or second control lever for braking.

Conventionally, the bracket member is covered by a soft grip cover which is relatively soft to the touch.

The cover is dimensioned to be a good fit on the external surface of the bracket member thereby to avoid unintentional displacement thereof from the bracket member. The second control lever is pivotally mounted on the outside of the bracket member and the cover covers the pivotal mounting of the second lever at a root portion of the latter, so that the cyclist, when gripping the cover for steering of the cycle, presses the inner surface of the cover against the outer surface of said second control lever. The resultant deformation of the cover gives rise to an increased resistance to the pivotal movement of the second control lever so that a larger force is required to operate the second lever with the cyclist's hand gripping the bracket member through the cover than would otherwise be necessary. Also in these circumstances the second control lever swings relative to the cover pushing against the rider's hand gripping said cover, thereby resulting in a less smooth overall control lever operation and a degree of discomfort to the rider.

It is an object of the present invention to avoid or minimize one or more of the above disadvantages.

It is known to provide a control device for a cycle having drop-type handlebars with straight and arcuate handlebar portions, said device comprising: a bracket member having a front wall, a rear wall, and first and second side walls; a first control lever pivotally mounted in said bracket member so as to extend, in use, generally alongside said arcuate handlebar portion; a second control lever pivotally mounted at the outer surface of said first side wall of said bracket member, to extend generally alongside said straight handlebar portion, and having a drive transmission means for transmitting drive to said first control lever during movement of said second control lever; and a grip-shaped cover covering said bracket member and the pivotal mountings of said first and second control levers on said bracket member; the present invention being characterized in that said bracket member is provided with first and second supports extending between said outer surface of said first side wall of said bracket member and an inner surface of said cover opposite said outer surface of said first side wall, and each having a greater depth than the thickness of said second control lever so as to support said inner surface of said cover at a predetermined spacing from said outer surface of said first side wall and above the outer surface of said second control lever thereat, said supports being disposed at opposite sides of the pivotal mounting of said second control lever.

The supports support the cover against deformation when a cyclist grips said cover for steering of the cycle, so that pressure of the inner surface of the cover, under the influence of the gripping force exerted by the cyclist, against the second control lever, is substantially avoided thereby preventing the development of additional resistance to the pivotal movement of the second control lever.

This invention is also advantageous in that the control device cover extends around the pivotal mountings of the control levers especially that of the second control lever, giving an improved appearance to the control device as a whole and enabling a cyclist to steer the cycle while gripping the cover in a comfortable manner and operating the control lever with a light touch even while gripping the cover and regardless of the strength of his gripping force on the cover.

Regarding the supports, four different embodiments are specifically disclosed. Firstly, the supports are formed integrally with the bracket member; secondly, they are formed separately therefrom being made from, for example, a synthetic resin material and are secured to the bracket member; thirdly, discrete supports are secured to the cover; and fourthly, the supports are formed integrally with the cover.

The particular form of the support used will depend on individual requirements but that in which the supports are formed integrally with a bracket member formed of metallic plate are generally preferred due to their ease and economy of manufacture.

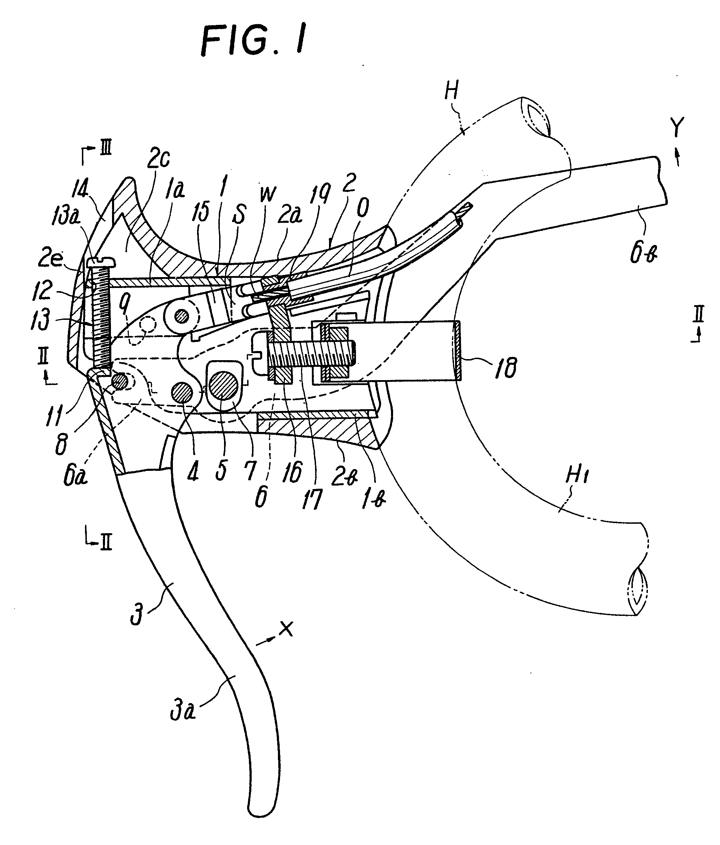

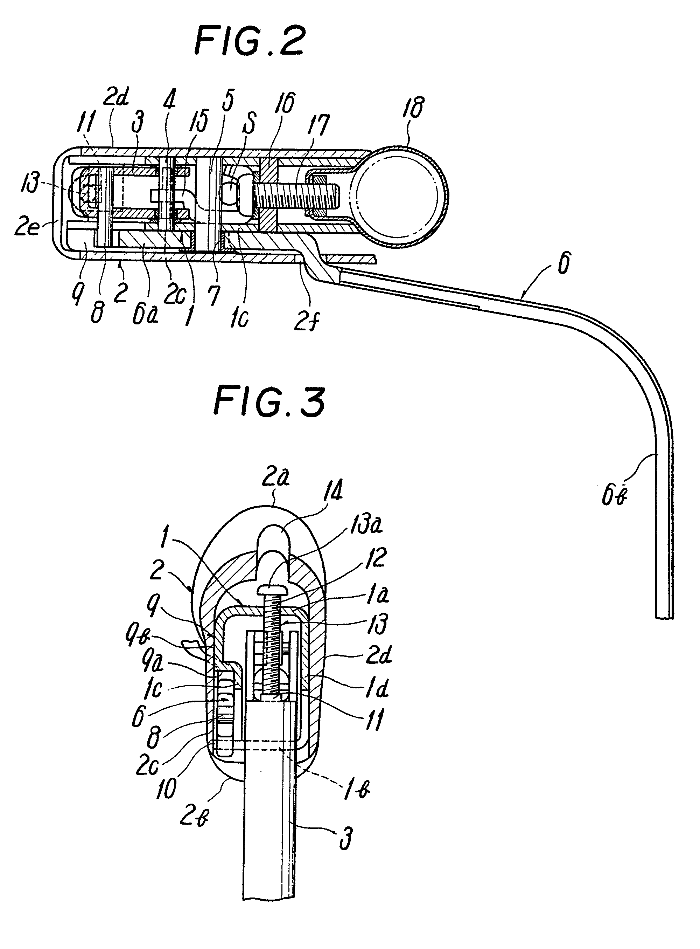

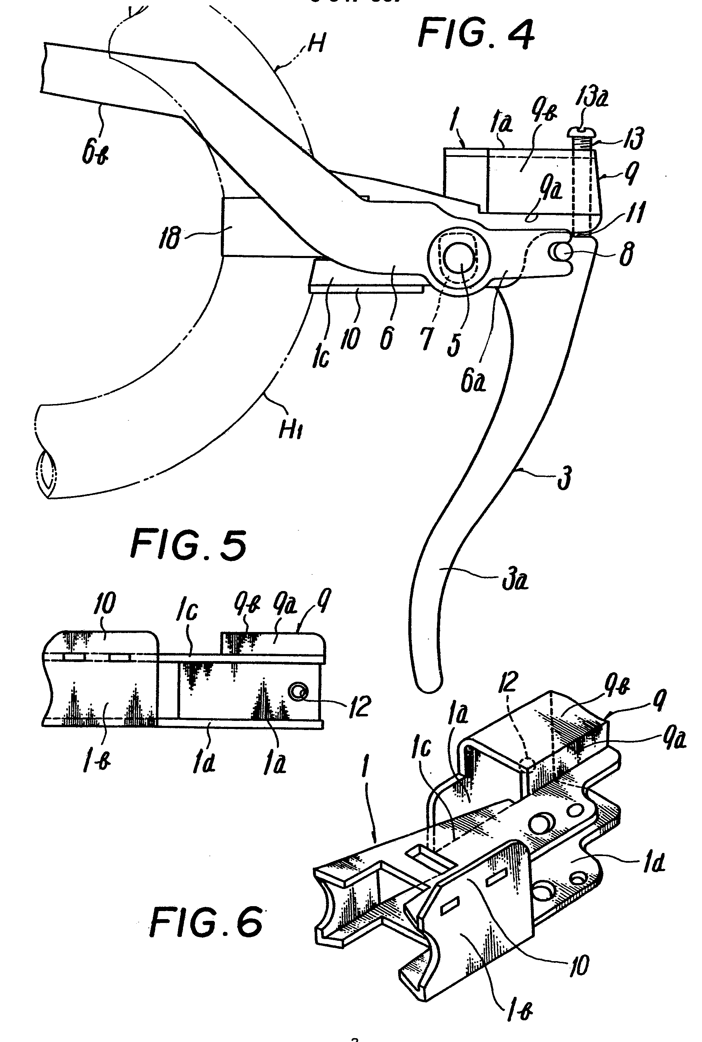

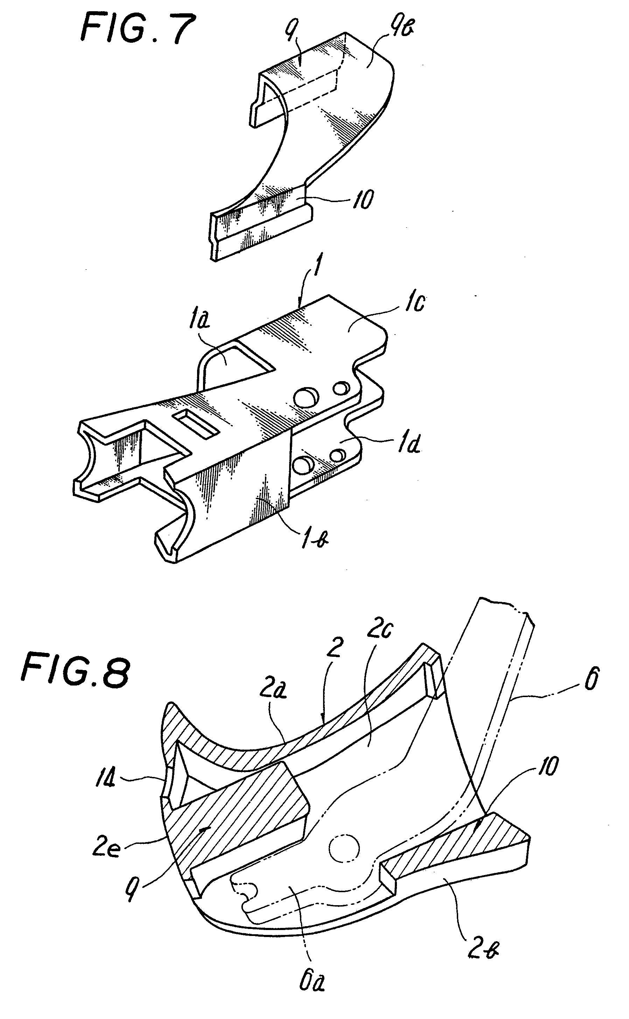

Further preferred features and advantages of the invention will appear from the following detailed description given by way of example of some preferred embodiments illustrated with reference to the accompanying drawings in which: Figure 1 is a longitudinal sectional view of a first control devce of the invention; Figure 2 is a sectional view taken on the line II—II in Figure 1; Figure 3 is a sectional view taken on the line III—III in Figure 1; Figure 4 is a rear view of the device of Figures 1 to 3 with the cover removed; Figure 5 is a front view of a bracket member alone of the device of Figures 1 to 4; Figure 6 is a persective view of the bracket of Figure 5; Figure 7 is a perspective exploded view of the bracket member of a second device of the invention; and Figure 8 is a perspective sectional view of the cover of a third device of the invention.

Figure 1 shows a bracket member 1 mounted on an arcuate, generally U-shaped, drop handlebars ($H$) portion $H_1$ (the remaining portions are not shown). A suitably shaped hand grip cover is disposed around the bracket member 1. The bracket member 1 has a front wall 1$a$, a rear wall 1$b$, and a pair of first and second side walls 1$c$ and 1$d$. A first control lever 3 extends generally alongside the arcuate handlebars portion $H_1$ and is pivotally supported betwen the side walls 1$c$ and 1$d$ of the bracket member 1 on a first control lever pivot shaft 4. A second control lever 6 extends generally alongside the straight portion of the handlebar $H$ and is pivotally connected to the projecting end of the second control lever pivot shaft 5 through a bush 7. A drive connection portion 6$a$ of the second control lever 6 extends beyond the pivoted end of said second control lever generally laterally of the first control lever 3 so that a forked end of said connection portion 6$a$ engages with a shaft 8 connected to the first control lever 3 to provide a drive transmitting connection between said first and second control levers 3, 6 so that they operate in association with each other.

The cover 2 is formed of a soft material, such as natural or synthetic rubber or other soft synthetic resin or polymer material, being shaped for comfortable and secure gripping thereof, and has a front wall 2$a$, a rear wall 2$b$, first and second side walls 2$c$ and 2$d$, and an upper wall 2$e$, which overlie respective ones of the front wall 1$a$, rear wall 1$b$ and first and second side walls 1$c$ and 1$d$ of the bracket member 1, gripping the bracket member 1 in a secure and stable manner resisting unintentional displacement of the cover from said bracket member. The cover 2 is provided at its first side wall 2$c$ with an elongate slot 2$f$ for accommodating the range of pivotal movement of the second control lever 6, whose grip portion 6$b$ projects outwardly from the cover 2 through said slot 2$f$.

In the above described embodiment shown in Figures 1 to 6 the bracket member 1 is provided with supports 9 and 10, which are disposed at opposite sides of the pivotal mounting 5 of the second control lever 6, and project outwardly from the outer side of the first side wall 1$c$ adjacent the second control lever 6, beyond the outward side of the second control lever 6, each having a greater depth than the thickness of the adjacent portion of said second control lever 6. The first side wall 2$c$ of the cover 2 is supported by the supports 9 and 10 at its inward surface at a predetermined spacing from the opposed outer surface of the second control lever 6, the spacing preventing the cover 2 from being pressed with its inner surface against the second control lever 6, thereby avoiding the creation of any additional resistance to the pivotal movement of the second control lever 6.

The abovementioned first and second supports 9 and 10, as shown in Figures 5 and 6, are formed integrally with the bracket member 1, the first support 9 comprising an upstanding wall 9$a$ generally perpendicular to the first side wall 1$c$ and a support wall 9$b$ extending from the upstanding wall 9$a$ generally parallel to the first side wall 1$c$ and contiguous with the front wall 1$a$, the second support 10 extending in continuation of the rear wall 1$b$ of the bracket member 1. In this case the supports 9 and 10 are easy to form because the bracket member 1 produced in conventional manner from metallic plate.

The first support 9 is disposed at the front wall 1$a$ side of the bracket member and the second support 10 at the rear wall 1$b$ side, the supports 9 and 10 being disposed on opposite sides of the pivoted portion of second control lever 6 on opposite sides of the second control lever pivot shaft 5, so that the first support 9 is positioned outwardly of the second control lever pivotal mounting 5 with respect to the drop handlebar $H$, that is, away therefrom, and the second support 10 inwardly of said pivotal mounting 5, that is, towards the drop handlebar $H$. Also, the support wall 9$b$ of the first support 9 is made larger in width. As may be seen in Figure 1 each of the first and second supports 9, 10 is disposed on a respective trailing side of the second control lever 6 with respect to the pivotal direction of movement (not shown, $Y$) upon actuation of said second control lever 6.

Accordingly the gripping force exerted by a cyclist steering the cycle while gripping the bracket member 1 through the cover 2, can be reliably borne by the first support 9 on the front wall 1$a$ side, on which the gripping force acts to the greatest extent. In addition the cyclist can grip the cover 2 in reasonable comfort.

Alternatively, the supports 9 and 10 can, as shown in Figure 7, be formed separately from the bracket member 1 and formed of, e.g., a synthetic resin material and mountable on the bracket member 1 or cover 2, or can instead, as shown in Figure 8, be formed integrally with the cover 2 itself. In the latter case, it is necessary to avoid contact of the first side wall 2c of the cover 2 with the second control lever 6 when the cover 2 is gripped so that bending of the supports 9 and 10 occurs. The supports 9 and 10, when formed separately from the bracket member 1, are preferably made integrally with each other as shown in Figure 7.

In Figures 1 to 3, the first control lever 3 has provided at its pivoted end a stop means 11, and the bracket member 1 is provided at its front wall 1a with a threaded bore 12, in which is screw-threadedly engaged an adjuster 13 having at its head a control portion 13a and abutting at its tip said stop means 11, thereby adjustably controlling the end limit positions the first and second control levers 3 and 6 during return movement thereof. The cover 2 has an aperture 14 in a portion opposite the threaded bore 12 for providing access to the adjuster control portion 13a for rotatably adjusting said adjuster 13 from outside the cover 2 through said aperture 14 by a suitable tool such as a screw-driver.

The bush 7 around the second control lever pivot shaft 5 is generally tubular and non-circular in its outer cross-section. It also has an eccentric bore for receiving therethrough said second control lever pivot shaft 5 and a flange at one longitudinal end, so that the second lever 6 is adjustable as to its pivoting axis by exchanging the bush for another one with the same bore diameter but with said bore in a different disposition relative to the outer circumference of its cross-section.

The first control lever 3 extends from its pivotal axis 4 towards the front wall 1a and pivotally supports at its respective extreme end a holder 15 for an end piece S of a control wire W.

In addition, in Figures 1 and 2, there is shown a generally planar adapter 16 supported between the first and second side walls 1c and 1d of bracket member 1. This adapter 16 supports a band member 18 via a mounting bolt 17, the band member 18 encircling the arcuate portion H₁ of the handlebar H at a desired position along its length. Upon tightening, the mounting bolt 17 draws the adapter 16 and band member 18 together thereby clamping the bracket member 1 to the arcuate handlebard portion H₁. A stop 19 for an outer sheath O for the control wire W is disposed on the adapter 16 so that a control cable comprising the wire W and outer sheath O is led into the bracket member 1.

When a cyclist, while gripping the cover 2 during steering of the cycle, wishes to actuate the control levers for braking, he grasps the free end portion 3a of the first control lever 3 with the fingers of his hand gripping said cover 2 and swings the first control lever 3 in the direction of the arrow X in Figure 1., thereby pulling the control wire W to actuate the brake mechanism connected thereto (not shown). In this case the first side wall 2c of the cover 2 is reliably prevented from pressing against the second control lever 6 due to the fact that the supports 9 and 19 define a predetermined spacing between the inward surface of the first side wall 2c of the cover 2 and the second control lever 6, and are disposed on opposite sides of the pivotal mounting 5 of the second control lever 6 so that the gripping force exerted on the cover 2 by the cyclist's hand is transmitted to the bracket member 1 through the supports 9 and 10. As a result, movement of the second control lever 6 is not restricted so that said lever is operable with a light touch.

As will be apparent from the above, the control device of the present invention is provided with a spacing under the cover by the supports and the gripping force exerted by the supports and the gripping force exerted by the cyclist's hand is transmitted to the bracket member through supports, preventing pressing of the cover against the second lever, so that the cyclist can operate the control lever with a light touch while gripping the cover on the bracket member. Furthermore, there is obtained a more comfortable grip because the movement of the second control lever is not transmitted to the cyclists hand through the cover.

## Claims

1. A control device for a cycle having drop-type handlebars (H) with straight and arcuate (H₁) portions for mounting on a said arcuate handlebar portion (H₁), said device comprising: a bracket member (1) having a front wall (1a), a rear wall (1b), and first and second side walls (1c, 1d); a first control lever (3) pivotally mounted (4) in said bracket member (1) so as to extend, in use, generally alongside said arcuate handlebar portion (H₁); a second control lever (6) pivotally mounted (5) at the outer surface of said first side wall (1c) of said bracket member (1), to extend generally alongside said straight handlebar portion and having a drive transmission means (6a, 8) for transmitting drive to said first control lever during movement of said second control lever (6); and a grip-shaped cover (2) covering said bracket member and the pivotal mountings (4, 5) of said first and second control levers (3, 6) on said bracket member (1); characterized in that said bracket member (1) is provided with first and second supports (9, 10) extending between said outer surface of said first side wall (1c) of said bracket member (1) and an inner surface of said cover (2) opposite said outer surface of said first side wall (1c) and

each having a greater depth than the thickness of said second control lever (6) so as to support said inner surface of said cover (2) at a predetermined spacing from said outer surface of said first side wall (1c) and above the outer surface of said second control lever (6) thereat, said supports (9, 10) being disposed at opposite sides of the pivotal mounting (5) of said control lever (6).

2. A control device according to Claim 1 wherein said first and second supports (9, 10) are formed integrally with said bracket member (1).

3. A control device according to Claim 2, wherein said first support (9) comprises an upstanding wall (9a) rising from said first side wall (1c) of said bracket member (1) and a support wall (9b) connecting said upstanding wall (9a) and the front wall (1a) of the bracket member (1) and extending generally parallel to said first side wall (1c).

4. A control device according to Claim 2 or Claim 3 wherein said second support (10) is formed as an extension of the rear wall (1b) of said bracket member (1).

5. A control device according to Claim 1, wherein said first and second supports (9, 10) are formed separately from said bracket member (1) and mounted thereon with the aid of securing means.

6. A control device according to Claim 1, wherein said first and second supports (9, 10) are formed separately from said bracket member (1) and secured to said cover (2) by securing means.

7. A control device according to Claim 1, wherein said first and second supports (9, 10) are formed integrally (2b, 2a) with said cover (2).

8. A control device according to any one of Claims 1 to 7 wherein said first and second supports are disposed on opposite sides of said second control lever (6).

9. A control device according to any one of Claims 1 to 8 wherein said first and second supports (9, 10) are disposed outwardly and inwardly, respectively, of the pivotal mounting (5) of said second control lever (6) with respect to said drop handlebar (H).

10. A control device according to any one of Claims 1 to 9 wherein each of said first and second supports (9, 10) is disposed on a respective trailing side of the second control lever (6) with respect to the pivotal direction of movement (not shown, Y) upon actuation of said second control lever (6).

11. A control device according to any one of Claims 1 to 10 wherein said first support (9) has a support wall (9b) generally parallel to the first side wall (1c) of said bracket member (1) said first support (9) being disposed at the front wall side (1a) of said bracket member (1) and on the outward side of the pivotal mounting (5) of said second control lever (6) with respect to the handlebar (H).

**Patentansprüche**

1. Steuervorrichtung für ein Fahrrad mit einem Rennlenker (H), der gerade und gebogene (H₁) Teile hat, für die Befestigung am gebogenen Teil (H₁), welche aufweist: ein Auslegerteil (1) mit einer Vorderwand (1a), einer Rückwand (1b) und ersten und zweiten Seitenwänden (1c, 1d); einen ersten Steuerhebel (3), der schwenkbar (4) im Auslegerteil (1) gelagert ist, um sich bei Benutzung im wesentlichen entlang dem gebogenen Lenkerteil (H₁) zu erstrecken; einen zweiten Steuerhebel (6), der schwenkbar (5) an der Außenoberfläche der ersten Seitenwand (1c) des Auslegerteils (1) gelagert ist, um sich im wesentlichen entlang dem geraden Lenkerteil zu erstrecken, und der eine Antriebsübertragungsvorrichtung (6a, 8) aufweist, zum Übertragen des Antriebs auf den ersten Steuerhebel (3), während der zweite Steuerhebel (6) bewegt wird; und ein grifförmiges Abdeckteil (2), das das Auslegerteil (1) und die Schwenklagerungen (4, 5) des ersten und zweiten Steuerhebels (3, 6) am Auslegerteil abdeckt; dadurch gekennzeichnet, daß das Auslegerteil (1) mit ersten und zweiten Abstützteilen (9, 10) versehen ist, die sich zwischen der Außenfläche der ersten Seitenwand (1c) des Auslegerteils (1) und der der Außenfläche der ersten Seitenwand (1c) gegenüberliegenden Innenfläche des Abdeckteils (2) erstrecken und jeweils eine Tiefe aufweisen, die größer ist als die Dicke des zweiten Steuerhebels (6), um die Innenfläche des Abdeckteils (2) in einem vorbestimmten Abstand von der Außenfläche der ersten Seitenwand (1c), und über der Außenfläche des zweiten Steuerhebels (6) daran abzustützen, wobei die Abstützteile (9, 10) an gegenüberliegenden Seiten der Schwenklagerung (5) des zweiten Steuerhebels (6) angeordnet sind.

2. Steuervorrichtung nach Anspruch 1, dadurch gekennzeichnet, daß die ersten und zweiten Abstützteile (9, 10) einstückig mit dem Auslegerteil (1) ausgebildet sind.

3. Steuervorrichtung nach Anspruch 2, dadurch gekennzeichnet, daß das erste Abstützteil (9) eine aufrechte Wand (9a), die von der ersten Seitenwand (1a) des Auslegerteils (1) aufsteigt, und eine Stützwand (9b) aufweist, die die aufrechte Wand (9a) und die Vorderwand (1a) des Auslegerteils miteinander verbindet und sich im wesentlichen parallel zur ersten Seitenwand (1c) erstreckt.

4. Steuervorrichtung nach Anspruch 2 oder 3, dadurch gekennzeichnet, daß das zweite Abstützteil (10) als Verlängerung der Rückwand (1b) des Auslegerteils (1) ausgebildet ist.

5. Steuervorrichtung nach Anspruch 1, dadurch gekennzeichnet, daß die ersten und zweiten Abstützteile (9, 10) getrennt vom Auslegerteil (1) ausgebildet sind und daran mit Hilfe von Befestigungsmitteln befestigt sind.

6. Steuervorrichtung nach Anspruch 1, dadurch gekennzeichnet, daß die ersten und zweiten Abstützteile (9, 10) getrennt vom Auslegerteil (1) ausgebildet sind und durch Befestigungsmittel am Abdeckteil (2) befestigt sind.

7. Steuervorrichtung nach Anspruch 1, dadurch gekennzeichnet, daß die ersten und zweiten Abstützteile (9, 10) einstückig (2b, 2a) mit dem Abdeckteil (2) ausgebildet sind.

8. Steuervorrichtung nach einem der Ansprüche 1 bis 7, dadurch gekennzeichnet, daß die ersten und zweiten Abstützteile (9, 10) auf einander gegenüberliegenden Seiten des zweiten Steuerhebels (6) angeordnet sind.

9. Steuervorrichtung nach einem der Ansprüche 1 bis 8, dadurch gekennzeichnet, daß die ersten und zweiten Abstützteile (9, 10) bezüglich des Rennlenkers (H) außerhalb bzw. innerhalb der Schwenklagerung (5) des zweiten Kontrollhebels (6) angeordnet sind.

10. Steuervorrichtung nach einem der Ansprüche 1 bis 9, dadurch gekennzeichnet, daß jedes der ersten und zweiten Abstützteile (9, 10) auf der jeweils vorlaufenden Seite des zweiten Steuerhebels (6) bezüglich der Schwenkrichtung (nicht gezeigt, Y) bei Betätigung des zweiten Steuerhebels (6) angeordnet sind.

11. Steuervorrichtung nach einem der Ansprüche 1 bis 10, dadurch gekennzeichnet, daß das erste Abstützteil (9) eine Stützwand (9b) aufweist, die im wesentlichen parallel zur ersten Seitenwand (1c) des Auslegerteils (1) ist, wobei das erste Abstützteil (9) an der Vorderwandseite (1a) des Auslegerteils (1) und auf der Außenseite der Schwenklagerung (5) des zweiten Steuerhebels (6) bezüglich des Lenkers (H) angeordnet ist.

**Revendications**

1. Dispositif de commande, pour bicyclette à guidon (H) recourbé vers le bas comprenant des parties droites et des parties courbes, qui se fixe sur une dite partie courbe (H₁) du guidon, ce dispositif comprenant: une monture (1) qui comporte une paroi avant (1a), une paroi arrière (1b) et des première et deuxième parois latérales (1c, 1d); un premier levier de commande (3) fixé de façon pivotante dans la monture (1) de façon à s'étendre, en utilisation, sensiblement le long de la partie courbe (H₁) du guidon; un deuxième levier de commande (6) fixé de façon pivotante (5) à la surface extérieure de la première paroi latérale (1c) de la monture (1), s'étendant sensiblement le long de la partie droite du guidon et comportant des moyens (6a, 8) de transmission de mouvement pour transmettre un mouvement au premier levier de commande pendant le mouvement du deuxième levier de commande (6); et un capuchon (2) en forme de poignée recouvrant la monture et les pivots de fixation (4, 5) des premier et deuxième leviers de commande (3, 6) sur la monture (1); caractérisé en ce que la monture (1) comporte des premier et deuxième supports (9, 10) s'étendant entre la surface extérieure de la première paroi latérale (1c) de la monture (1) et une surface intérieure du capuchon (2) située en face de cette surface extérieure de la première paroi latérale (1c), chaque support ayant une profondeur supérieure à l'épaisseur du deuxième levier de commande (6) de façon à supporter la surface intérieure du capuchon (2) à une distance prédéterminée de la surface extérieure de la première paroi latérale (1c) et au-dessus de la surface extérieure du deuxième levier de commande (6), ces supports (9, 10) étant situés de part et d'autre du pivot de fixation (5) du deuxième levier de commande (6).

2. Dispositif de commande suivant la revendication 1, dans lequel les premier et deuxième supports (9, 10) sont formés solidairement de la monture (1).

3. Dispositif de commande suivant la revendication 2, dans lequel le premier support (9) comprend une paroi montante (9a), qui part de la première paroi latérale (1c) de la monture (1), et une paroi support (9b) reliant cette paroi montante (9a) et la paroi avant (1a) de la monture (1) et s'étendant sensiblement parallèlement à la première paroi latérale (1c).

4. Dispositif de commande suivant la revendication 2, ou la revendication 3, dans lequel le deuxième support (10) est constitué par un prolongement de la paroi arrière (1b) de la monture (1).

5. Dispositif de commande suivant la revendication 1, dans lequel les premier et deuxième supports (9, 10) sont formés séparément de la monture (1) et sont montés sur celce-ci à l'aide de moyens de fixation.

6. Dispositif de commande suivant la revendication 1, dans lequel les premier et deuxième supports (9, 10) sont formés séparément de la monture (1) et sont fixés au capuchon (2) par des moyens de fixation.

7. Dispositif de commande suivant la revendication 1, dans lequel les premier et deuxième supports (9, 10) sont formés solidairement (2b, 2a) du capuchon (2).

8. Dispositif de commande suivant l'une quelconque des revendications 1 à 7, dans lequel les premier et deuxième supports sont situés sur des côtés opposés du deuxième levier de commande (6).

9. Dispositif de commande suivant l'une quelconque des revendications 1 à 8, dans lequel les premier et deuxième supports (9, 10) sont disposés respectivement vers l'extérieur et vers l'intérieur du pivot de fixation (5) du deuxième levier de commande (6), par rapport au guidon (H) recourbé vers le bas.

10. Dispositif de commande suivant l'une quelconque des revendications 1 à 9, dans lequel chacun des premier et deuxième supports (9, 10) est situé sur un côté arrière respectif du deuxième levier de commande (6), par rapport à la direction de pivotement (non représenté, Y) lorsqu'on manoeuvre le deuxième levier de commande (6).

11. Dispositif de commande suivant l'une quelconque des revendications 1 à 10, dans lequel le premier support (9) comprend une paroi support (9b) sensiblement parallèle à la première paroi latérale (1c) de la monture (1), ce premier support (9) étant situé du côté de la paroi avant (1a) de la monture (1) et du côté extérieur du pivot de fixation (5) du deuxième levier de commande (6), par rapport au guidon (H).

# FIG. 1

# FIG.2

# FIG.3

FIG. 4

FIG. 5

FIG. 6

FIG. 7

FIG. 8

4